# FASCICULE DE BREVET EUROPEEN

(11) **EP 3 431 854 B1**
(45) Date de publication et mention de la délivrance du brevet: **26.05.2021**
(21) Numéro de dépôt: 18305956.7
(22) Date de dépôt: 13.07.2018
(51) Int. Cl.: F16K 5/06, F16L 41/00, F16L 41/12

(54) **ENSEMBLE DE RACCORDEMENT D'UNE CONDUITE DE DÉRIVATION SUR UNE CANALISATION PRINCIPALE ET ROBINET À CAPTEUR**
ANSCHLUSSANORDNUNG EINER VERWZEIGUNGSLEITUNG AN EINE HAUPTKANALISATION, UND HAHN MIT SENSOR
CONNECTION ASSEMBLY OF A BYPASS LINE ON A MAIN PIPE AND TAP WITH SENSOR

(30) Priorité: 17.07.2017 FR 1756743
(43) Date de publication de la demande: 23.01.2019
(73) Titulaire: SAINTE LIZAIGNE, 36260 Sainte-Lizaigne (FR)
(72) Inventeur: VERHEE, Damien, 92200 Neuilly sur Seine (FR); BECCAVIN, Vincent, 36100 Issoudun (FR)
(74) Mandataire: Jacobacci Coralis Harle

(56) Documents cités:
- EP-A1- 1 757 854
- EP-A1- 2 735 783
- EP-A1- 3 078 894
- DE-A1-102015 009 902
- US-A- 4 649 948

## Description

L'invention concerne un ensemble de raccordement d'une conduite de dérivation sur une canalisation principale et un robinet à capteur, notamment un hydrophone. Elle a des applications dans le domaine de la distribution de l'eau et de la gestion et maintenance des réseaux de distribution d'eau.

### ARRIERE-PLAN TECHNOLOGIQUE

La maintenance des réseaux de distribution d'eau constitue un enjeu important pour les distributeurs d'eau, qu'ils soient privés ou de services publics. L'inaccessibilité du réseau due au fait qu'il est enterré, rend la surveillance de ce patrimoine très difficile. Outre les problèmes de fonctionnement de matériel (blocage de vannes...) les principales défaillances observées sur les réseaux se traduisent par des fuites.

La diminution des fuites sur les réseaux d'eau est un objectif très important pour les distributeurs d'eau, à tel point que la performance d'un réseau est mesurée par son taux de fuite.

Les conséquences des fuites sur les réseaux peuvent être nombreuses et fortement préjudiciables. La perte d'eau potable et l'appauvrissement de la ressource arrivent en premier lieu. Les fuites entraînent également une perte de pression, donc la nécessité de surdimensionner les installations, notamment pour les surpresseurs, ainsi que la capacité des installations de traitement de l'eau. Il en résulte aussi l'augmentation de la consommation en énergie associée.

Les fuites d'eau peuvent également engendrer des dommages indirects comme la déstabilisation des sols et les conséquences que cela peut avoir sur les structures installées à proximité (habitation, réseau routier...)

Les distributeurs d'eau disposent actuellement de différents moyens de détection de fuites. Parmi ceux-ci, on peut citer les dispositifs acoustiques passifs d'écoute installés en des points d'écoute qui peuvent être des robinets, des vannes... Parmi ceux-ci on peut mentionner le robinet de la demande de brevet EP 12 306 449.

On connait également les systèmes de robinet décrits dans EP 1 757 854A1, DE 10 2015 009902 A1, EP 3 078 894 A1, US 4 649 948 A et EP 2 735 783 A1.

Ces dispositifs mettent en œuvre des hydrophones qui sont au contact de l'eau et qui sont des capteurs acoustiques relativement fragiles et qui peuvent parfois tomber en panne. Il est alors nécessaire de les changer. Lorsque l'hydrophone est retiré pour être remplacé, l'eau se retrouve en contact avec l'environnement extérieur de la conduite et/ou du robinet et peut être souillée. Ceci est d'autant plus probable que l'accès à l'hydrophone est difficile, au fond d'un regard de dimensions réduites pouvant même être rempli de liquides stagnants de l'environnement comme par exemple des eaux de pluie ayant lessivé une chaussée de circulation.

Il en est de même pour tout autre type de capteur mis au contact de l'eau de la conduite, comme par exemple les capteurs de température, de pression... qui peuvent être changés.

Il est donc souhaitable de disposer d'un équipement qui facilite le changement de du capteur tout en assurant une hygiène satisfaisante dans le cadre de la mise en œuvre d'un robinet (ou vanne) qui comporte un capteur qui est au contact direct avec l'eau.

### OBJET DE L'INVENTION

Ainsi, l'invention concerne d'une manière générale un ensemble de raccordement d'une conduite de dérivation sur une canalisation principale d'eau enterrée sous la surface d'un sol, ledit ensemble comportant un robinet et un tubage, le robinet raccordant la conduite de dérivation à la canalisation principale d'eau, le tubage permettant d'accéder au robinet depuis la surface du sol, ledit robinet comportant un corps de robinet avec un mamelon amont destiné à être raccordé à la canalisation principale, un mamelon aval destiné à être raccordé à la conduite de dérivation et des moyens de manœuvre du robinet, lesdits moyens de manœuvre permettant au moins la mise en communication hydrique du mamelon aval avec l'eau de la canalisation principale en configuration d'ouverture du robinet ou la suppression de la communication en configuration de fermeture du robinet, les moyens de manœuvre étant commandables en rotation et comportant au moins un clapet manœuvrable en rotation par l'intermédiaire d'un axe de manœuvre, ledit clapet manœuvrable étant disposé dans une chambre de manœuvre agencée dans le corps du robinet et l'axe de manœuvre étant disposé dans un mamelon de manœuvre du corps du robinet, le robinet comportant un capteur, le capteur étant disposé dans un mamelon de capteur du robinet, le capteur étant fixé au robinet en traversant la paroi dudit robinet de manière étanche et amovible, le capteur comportant une extrémité de captage disposée dans le robinet au contact de l'eau et, opposée, une extrémité de raccordement placée à l'extérieur du robinet,

Selon l'invention dans sa généralité, le mamelon de capteur comporte un orifice de fixation du capteur, ledit orifice de fixation étant orienté sur le mamelon de capteur de manière à ce que l'axe d'insertion et de retrait du capteur dans ledit orifice de fixation soit parallèle à l'axe de la commande en rotation des moyens de manœuvre du robinet.

L'invention dans sa généralité peut être déclinée selon un premier mode à moyens de manœuvre du robinet à un seul clapet manœuvrable et selon un second mode à moyens de manœuvre du robinet à deux clapets manœuvrables indépendamment l'un de l'autre, un des deux clapets permettant plus spécifiquement la coupure de la dérivation, ceci de préférence en étant installé sur le mamelon aval, l'autre clapet pouvant couper spécifiquement l'eau au capteur (clapet dans le mamelon de capteur) ou, alors, être une coupure globale de l'eau (clapet en amont, notamment dans le mamelon amont).

Le fait que l'axe d'insertion et de retrait du capteur dans l'orifice de fixation soit parallèle à l'axe de la commande en rotation des moyens de manœuvre du robinet, et dans le cas où les moyens de manœuvre sont deux clapets manœuvrables, de préférence parallèle à l'axe de la commande en rotation d'un des deux clapets, celui permettant plus spécifiquement la coupure de la dérivation, peut conduire à de nombreuses dispositions équivalentes des éléments du robinet. Par exemple, cela peut correspondre au fait que l'axe d'insertion et de retrait du capteur dans l'orifice de fixation est parallèle à la direction d'alignement du mamelon amont et du mamelon de manœuvre dans un mode de réalisation particulier. En pratique, l'axe de la commande en rotation des moyens de manœuvre du robinet, d'au moins un des clapets dans le cas de deux clapets (celui permettant plus spécifiquement la coupure de la dérivation), correspond à la direction de l'axe de manœuvre dans le mamelon de manœuvre et aussi à celui de la tige ou clé d'actionnement que l'on descend dans le tubage pour tourner le carré de manœuvre chapeautant le mamelon de manœuvre afin de pouvoir couper la dérivation et donc la distribution de l'eau vers un abonné.

Dans divers modes de mise en œuvre de l'invention, les moyens suivants pouvant être utilisés seuls ou selon toutes les combinaisons techniquement possibles et pour le robinet en lui-même en fonction du mode à un ou deux clapets manœuvrables, sont employés :
* notamment dans le cas du robinet à un clapet :
   - les moyens de manœuvre comportent un seul clapet manœuvrable, la chambre de manœuvre comportant ledit clapet manœuvrable est agencée dans le corps du robinet entre les mamelons amont et aval, de capteur et de manœuvre, la chambre de manœuvre étant reliée aux mamelons amont, aval, de capteur et de manœuvre, le mamelon amont et le mamelon de manœuvre ayant une même direction d'alignement et le mamelon aval étant à 90° de ladite direction d'alignement, et le mamelon de capteur est allongé selon un axe et comporte une extrémité en cul de sac à l'opposé de la chambre de manœuvre, l'axe du mamelon de capteur étant incliné par rapport à la direction d'alignement du mamelon amont et du mamelon de manœuvre d'un angle de 90° plus ou moins 10°, et l'extrémité en cul de sac du mamelon de capteur comporte latéralement un orifice de fixation du capteur, ledit orifice de fixation étant orienté sur le mamelon de capteur de manière à ce que l'axe d'insertion et de retrait du capteur dans ledit orifice de fixation soit parallèle à la direction d'alignement du mamelon amont et du mamelon de manœuvre,
   - la chambre de manœuvre du robinet à un clapet est reliée à quatre lumières ou canaux internes de mamelons,
   - l'axe du mamelon de capteur est incliné par rapport à la direction d'alignement du mamelon amont et du mamelon de manœuvre d'un angle de 90° plus ou moins 10° et de préférence le 90° étant exclus, le mamelon de capteur n'étant pas perpendiculaire à la direction d'alignement du mamelon amont et du mamelon de manœuvre,
   - le mamelon de capteur est disposé sur la chambre de manœuvre sensiblement à l'opposé, c'est-à-dire en regard, du mamelon aval,
   - en position d'installation du robinet, la direction d'alignement du mamelon amont et du mamelon de manœuvre est verticale et le mamelon aval est horizontal,
   - le mamelon de capteur est horizontal,
   - le mamelon de capteur et le mamelon aval sont alignés sur une même direction,
   - le mamelon de capteur est incliné du bas, côté chambre de manœuvre, vers le haut, côté extrémité en cul de sac,
   - le mamelon de capteur est incliné du haut, côté chambre de manœuvre, vers le bas, côté extrémité en cul de sac,
   - l'axe du mamelon de capteur est incliné par rapport à la direction d'alignement du mamelon amont et du mamelon de manœuvre vers le bas et d'un angle compris entre 80° et 90°, cette dernière borne étant exclue,
   - l'axe du mamelon de capteur est incliné par rapport à la direction d'alignement du mamelon amont et du mamelon de manœuvre d'un angle de 90° et est donc perpendiculaire à cette dernière,
   - l'axe du mamelon de capteur est incliné par rapport à la direction d'alignement du mamelon amont et du mamelon de manœuvre d'un angle de 90° plus ou moins 5°,
   - l'orifice de fixation est disposé sur le mamelon de capteur de manière à ce que l'axe d'insertion et de retrait du capteur dans ledit orifice soit décalé d'une distance déterminée par rapport à la direction d'alignement du mamelon amont et du mamelon de manœuvre,
   - en position fonctionnelle du robinet installé sur la canalisation principale, l'axe d'insertion et de retrait du capteur dans l'orifice de fixation est vertical et la direction d'alignement du mamelon amont et du mamelon de manœuvre est verticale,
   - le mamelon de capteur comporte un système de purge pour purger d'éventuels gaz et assurer l'immersion de l'extrémité de captage du capteur,
   - le clapet manœuvrable est de type sphérique, multitours, conique ou équivalent,
   - le clapet manœuvrable est une sphère,
   - le robinet est un robinet quart de tour pour ouverture/fermeture,
   - la sphère est installée sur des sièges dans la chambre de manœuvre,
   - le robinet comporte au moins une paire de sièges de sphère, de préférence côtés mamelons amont et de manœuvre,
   - le siège amont, côté mamelon amont, est étanche,
   - le siège aval, côté mamelon aval, est étanche,
   - le siège côté mamelon de manœuvre est étanche,
   - le siège côté mamelon de capteur est étanche,
   - la sphère est configurée afin que le mamelon de capteur soit mis en communication hydrique avec le mamelon amont au moins lorsque les moyens de manœuvre sont en configuration d'ouverture du robinet,
   - un percement en T est ménagé dans la sphère pour mettre en communication hydrique le mamelon de capteur avec le mamelon amont lorsque les moyens de manœuvre sont en configuration d'ouverture,
   - un double percement en T est ménagé dans la sphère pour mettre en communication hydrique le mamelon de capteur avec le mamelon amont aussi bien lorsque les moyens de manœuvre sont en configuration d'ouverture que lorsqu'ils sont en configuration de fermeture,
   - le mamelon de capteur comporte intérieurement un clapet automatique, le clapet automatique étant ouvert par la présence du capteur et se fermant automatiquement lors du retrait du capteur,
   - le clapet automatique est à bille sur ressort, le ressort appliquant la bille contre un siège d'étanchéité lorsque le capteur est retiré du mamelon de capteur,
   - le mamelon de capteur à clapet sphérique supplémentaire est en communication directe avec le mamelon amont au lieu d'être en communication avec la chambre de manœuvre,
   - le mamelon de capteur comporte intérieurement un clapet manœuvrable supplémentaire actionnable en rotation par une biellette, le robinet à chambre de manœuvre reliée à quatre lumières ou canaux internes de mamelons étant alors à deux clapets,
* notamment dans le cas du robinet à deux clapets :
   - l'axe d'insertion et de retrait du capteur dans l'orifice de fixation est parallèle à l'axe de la commande en rotation du clapet permettant plus spécifiquement la coupure de la dérivation,
   - l'axe d'insertion et de retrait du capteur dans l'orifice de fixation est parallèle à l'axe de la commande en rotation du clapet disposé dans le mamelon aval,
   - les moyens de manœuvre comportent deux clapets manœuvrables indépendamment l'un de l'autre, un premier clapet général permettant d'ouvrir ou de fermer le mamelon amont et un second clapet aval permettant d'ouvrir ou de fermer le mamelon aval, chacun des clapets pouvant être commandé en rotation par un axe de manœuvre correspondant, le mamelon de capteur est disposé entre le premier clapet amont et le second clapet aval, et l'orifice de fixation du capteur est orienté sur le mamelon de capteur de manière à ce que l'axe d'insertion et de retrait du capteur dans ledit orifice de fixation soit parallèle à l'axe de la commande en rotation du second clapet aval,
   - le mamelon amont et le mamelon de capteur sont alignés et disposés de part et d'autre du premier clapet général et le mamelon aval est relié latéralement au mamelon de capteur, le premier clapet général étant dans une chambre de manœuvre reliée à deux lumières ou canaux internes de mamelons,
   - le mamelon amont et le mamelon de capteur sont alignés et disposés de part et d'autre du premier clapet général et le mamelon aval est relié sensiblement perpendiculairement au mamelon de capteur, le premier clapet général étant dans une chambre de manœuvre reliée à deux lumières ou canaux internes de mamelons,
   - le mamelon amont et le mamelon de capteur sont alignés et disposés de part et d'autre du premier clapet général, le premier clapet général étant dans une chambre de manœuvre reliée à trois lumières ou canaux internes de mamelons, le mamelon aval étant relié à la chambre de manœuvre du premier clapet général,
   - chacun des clapets est relié à deux lumières ou canaux internes de mamelon(s),
   - au moins un des deux clapets est relié à trois lumières ou canaux internes de mamelons,
   - le clapet aval est relié à deux lumières ou canaux internes du mamelon aval et le clapet amont est relié à deux ou trois lumières ou canaux internes de mamelons,
   - l'orifice de fixation est disposé sur le mamelon de capteur de manière à ce que l'axe d'insertion et de retrait du capteur dans ledit orifice soit décalé d'une distance déterminée par rapport à l'axe de la commande en rotation du second clapet aval,
   - en position fonctionnelle du robinet installé sur la canalisation principale, l'axe d'insertion et de retrait du capteur dans l'orifice de fixation est vertical et l'axe de la commande en rotation du second clapet aval est vertical,
   - l'orifice de fixation est disposé à l'extrémité supérieure du mamelon de capteur,
   - le mamelon de capteur comporte un système de purge pour purger d'éventuels gaz et assurer l'immersion de l'extrémité de captage du capteur,
   - les clapets manœuvrables sont de type sphérique, multitours, conique ou équivalent,
   - les clapets manœuvrables sont des sphères quart-de-tour,
* plus généralement dans l'ensemble :
   - le robinet est un robinet de prise en charge,
   - les moyens de manœuvre du robinet de prise en charge permettent, d'une part, le passage d'un outil de forage de la canalisation principale, et, d'autre part, la manœuvre du clapet manœuvrable pour la mise en communication entre le mamelon amont et le mamelon aval pour ouverture du robinet ou la suppression de la communication pour fermeture du robinet et, notamment, pour fermeture du robinet après forage afin de pouvoir retirer l'outil de forage sans fuite alors que la canalisation principale est en charge,
   - les mamelons sont creux et comportent chacun intérieurement une lumière ou canal interne de circulation de fluide,
   - le mamelon amont comporte un orifice amont à son extrémité côté conduite principale,
   - le mamelon aval comporte un orifice aval à son extrémité côté conduite de dérivation,
   - le mamelon de manœuvre comporte un orifice de manœuvre à son extrémité côté du carré de manœuvre, ledit orifice de manœuvre étant occupé par une partie des moyens de manœuvre et notamment un axe de manœuvre et le carré de manœuvre ou la biellette de manœuvre selon le cas,
   - l'axe de manœuvre et le carré de manœuvre sont d'un seul bloc,
   - le robinet est fixé à la canalisation principale par un collier de serrage,
   - le collier de serrage est rigide,
   - le collier de serrage est souple,
   - le capteur est interchangeable,
   - l'orifice de fixation sur le mamelon de capteur est un orifice fileté, le capteur pouvant être vissé ou dévissé du robinet,
   - le mamelon de capteur comporte autour de l'orifice de fixation du capteur un raccord permettant le raccordement d'un tube de zone propre,
   - le raccord autour de l'orifice de fixation du capteur permet la fixation d'un obturateur à la place du tube de zone propre,
   - le robinet comporte un obturateur sur le raccord autour de l'orifice de fixation du capteur,
   - l'orifice de fixation du capteur permet la fixation d'un obturateur à la place du capteur,
   - le robinet comporte un obturateur sur l'orifice de fixation du capteur,
   - l'ensemble comporte un tube de zone propre à deux extrémités et un capteur destiné à être relié à un module électronique de surveillance par un câble de liaison, le tube de zone propre étant raccordé à son extrémité inférieure au raccord autour de l'orifice de fixation du capteur, l'extrémité supérieure du tube de zone propre étant fermée par un tampon de fermeture amovible, le câble de liaison s'étendant dans le tube de zone propre pour ressortir à l'extrémité supérieure dudit tube de zone propre à travers un moyen d'étanchéité du tampon de fermeture,
   - le moyen d'étanchéité est un passe-câble à presse étoupe,
   - le capteur est un hydrophone permettant de mesurer les vibrations acoustiques transmises par l'eau,
   - le capteur est un capteur choisi parmi les capteurs acoustique, de température, de pH, de pression, de turbidité, de mesure de composés chimiques, individuellement dans un capteur mono-paramètre ou par association au sein d'un même capteur multi-paramètres,
   - l'hydrophone comporte un capteur acoustique,
   - le capteur acoustique est un capteur optique,
   - le capteur acoustique est un microphone électrodynamique,
   - le capteur acoustique est un microphone électret,
   - le capteur acoustique est un microphone piézoélectrique,
   - l'hydrophone comporte un capteur acoustique et des circuits électroniques, l'alimentation électrique des circuits électroniques provenant de l'extérieur de l'hydrophone par l'intermédiaire du câble électrique,
   - les circuits électroniques de l'hydrophone comportent des moyens de conditionnement du signal produit par le capteur acoustique,
   - les moyens de conditionnement sont des moyens analogiques,
   - les moyens de conditionnement sont des moyens mixtes analogiques et numériques,
   - les moyens de conditionnement sont choisis notamment parmi un ou plusieurs des moyens suivants : pré-amplification du signal, filtrage fréquentiel du signal, numérisation du signal, détection de signaux,
   - l'ensemble comporte un câble de liaison entre le capteur et le module électronique de surveillance,
   - le câble de liaison est monobloc avec le capteur,
   - le câble de liaison est connecté au capteur,
   - le câble de liaison est monobloc avec le module électronique de surveillance,
   - le câble de liaison est connecté au module électronique de surveillance,
   - le module électronique de surveillance comporte une source d'alimentation électrique,
   - la source d'alimentation électrique est autonome,
   - la source d'alimentation électrique est reliée à un réseau de distribution d'électricité,
   - la source d'alimentation électrique est choisie parmi une ou plusieurs des sources suivantes : électrochimique autonome, électrochimique rechargeable, super-condensateur rechargeable, alimentation par réseau de distribution électrique,
   - le module électronique de surveillance comporte des moyens analogiques,
   - le module électronique de surveillance comporte des moyens mixtes analogiques et numériques,
   - le module électronique de surveillance comporte un ou plusieurs des moyens suivants : pré-amplification du signal, filtrage fréquentiel du signal, numérisation du signal, détection de signaux, enregistrement de signaux, de télétransmission, de radio transmission, de génération d'alarme,
   - la télétransmission est filaire et/ou sans fil, optique ou radioélectrique, et dans ce dernier cas par radio transmission,
   - le câble de liaison est un câble de transmission de signaux électriques et/ou optiques,
   - les signaux sont choisis parmi des signaux de mesures du capteur, d'excitation du capteur, d'alimentation électrique,
   - le câble de liaison est un câble électrique,
   - le câble de liaison est un câble à fibre(s) optique(s),
   - le câble de liaison est un câble mixte électrique et à fibre(s) optique(s),
   - l'ensemble comporte un tube de bouche à clé à deux extrémités et le robinet comporte un système de fixation dudit tube de bouche à clé, l'extrémité inférieure du tube de bouche à clé venant s'insérer sur le robinet autour du mamelon de manœuvre,
   - le système de fixation du tube de bouche à clé sur le robinet est un tabernacle,
   - le tube de bouche à clé et le tube de zone propre sont parallèles,
   - le tube de bouche à clé et le tube de zone propre ont des hauteurs similaires,
   - les extrémités supérieures du tube de bouche à clé et du tube de zone propre sont sensiblement au même niveau, c'est-à-dire à la même hauteur,
   - l'ensemble comporte un module électronique de surveillance et ledit module est disposé dans le tube de bouche à clé,
   - le module électronique de surveillance sert en outre d'obturateur de l'extrémité supérieure du tube de bouche à clé,
   - l'ensemble comporte un tube d'enceinte destiné au tubage et surmonté au sol d'un tampon en fonte,
   - le tube d'enceinte est destiné à entourer au moins les extrémités supérieures du tube de zone propre et du tube de bouche à clé,
   - le tube de bouche à clé fait partie du tubage,
   - le tube de zone propre fait partie du tubage,
   - les tubes sont des tubes accordéons dont on peut régler la hauteur en les étirant plus ou moins,
   - les tubes sont de préférence en matière plastique,
   - le tube d'enceinte entoure la partie supérieure du tube de bouche à clé et/ou du tube de zone propre,
   - le robinet et/ou le capteur comportent un moyen de butée limitant l'introduction de l'extrémité de captage du capteur dans le mamelon de capteur,
   - le moyen de butée est un épaulement du capteur venant buter contre la face externe de la paroi du robinet.

Enfin, il est décrit mais non revendiqué, un robinet destiné à raccorder une conduite de dérivation à une canalisation principale d'eau, ledit robinet étant spécialement configuré pour l'ensemble de raccordement de l'invention.

### DESCRIPTION DETAILLEE D'UN EXEMPLE DE REALISATION

La présente invention, sans qu'elle en soit pour autant limitée, va maintenant être exemplifiée avec la description qui suit de modes de réalisation et de mise en œuvre en relation avec :
la Figure 1 qui représente une vue latérale, dans l'axe de la conduite principale, d'un ensemble de raccordement d'une conduite de dérivation sur la canalisation principale à robinet à un seul clapet manoeuvrable,
la Figure 2 qui représente une vue en perspective de l'ensemble de raccordement de la figure 1,
la Figure 3 qui représente une vue en coupe et perspective de l'ensemble de raccordement de la figure 2,
la Figure 4 qui représente un agrandissement et éclaté de la partie basse de la vue en coupe et perspective de la figure 3,
la Figure 5 qui représente un agrandissement et éclaté de la partie haute de la vue en coupe et perspective de la figure 3,
la Figure 6 qui représente une vue en coupe de l'ensemble de la figure 1 dans son contexte d'utilisation enterré sous une chaussée,
la Figure 7 qui représente une vue en perspective d'un ensemble de raccordement d'une conduite de dérivation sur la canalisation principale, le robinet étant à deux clapets manoeuvrables,
la Figure 8 qui représente une vue en coupe et perspective de l'ensemble de raccordement de la figure 7, et
la Figure 9 qui représente un agrandissement de la partie basse d'une vue latérale en coupe de l'ensemble de raccordement de la figure 7.

Dans sa généralité, l'invention propose un ensemble permettant d'adapter un accessoire, en particulier un capteur, sur un réseau d'eau enterré sans avoir à creuser, l'ensemble étant composé d'un robinet, qui est dans l'exemple représenté sur les figures un robinet de prise en charge, permettant si nécessaire de couper l'eau à un abonné raccordé et/ou à l'accessoire et d'un tubage dans un puit d'accès permettant de démonter et remonter l'accessoire et la coupure de l'eau. L'accès à l'accessoire et la coupure d'eau se fait depuis un point d'accès en surface du sol. L'accessoire une fois monté est en contact permanent avec l'eau et l'ensemble est étanche.

Les exemples de réalisation présentés en relation avec les figures concernent la distribution d'eau potable.

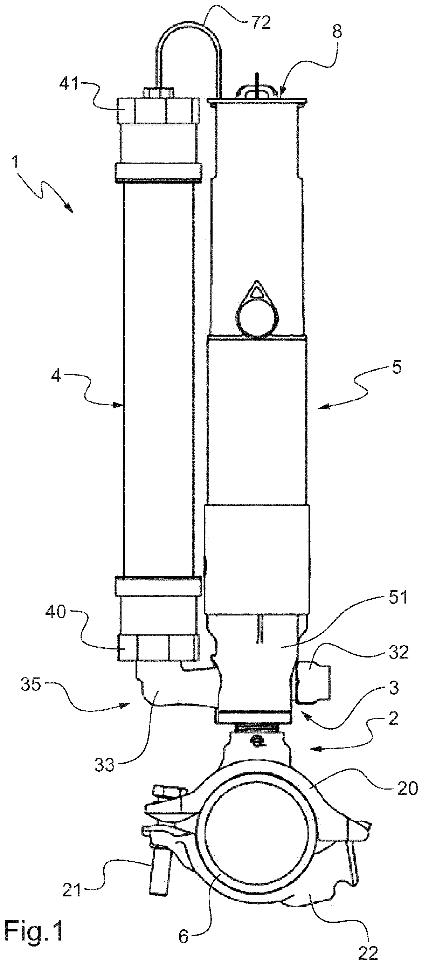

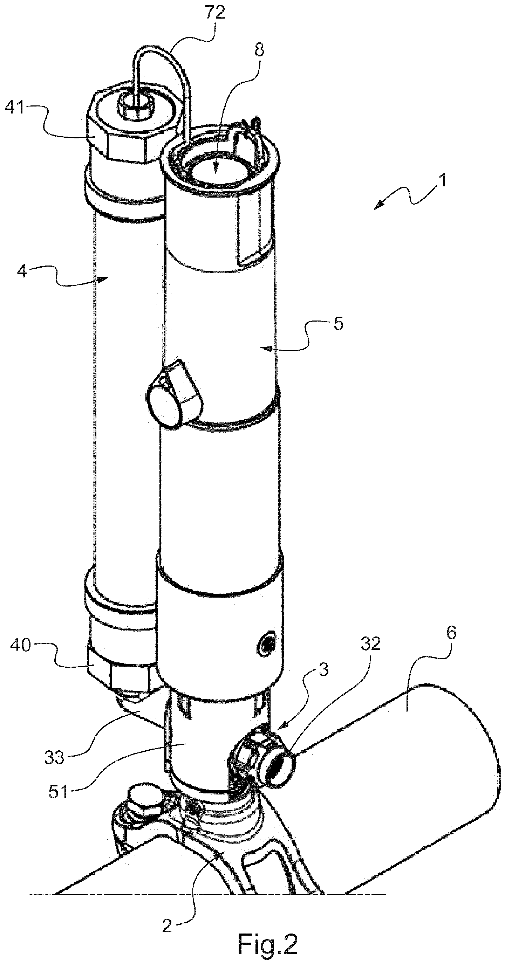

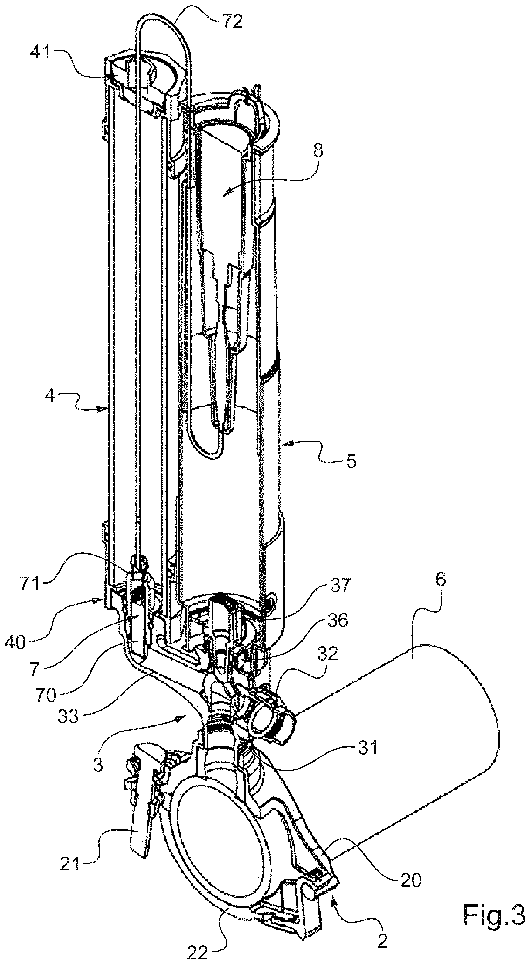

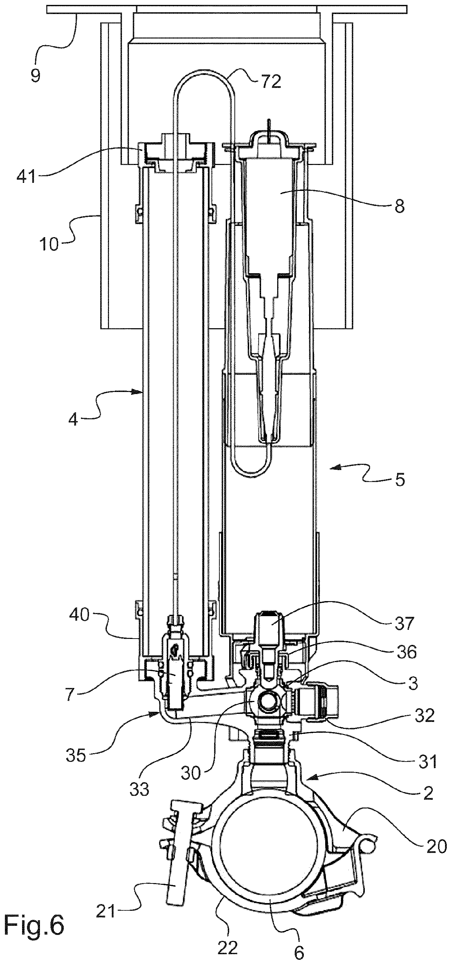

Sur les figures 1 à 6 à robinet à un seul clapet manœuvrable, l'accessoire est sur une zone déportée du robinet et cette zone déportée donnant accès à l'accessoire est constituée d'une partie creuse en excroissance du robinet qui est presque horizontale, légèrement inclinée vers le bas, de sorte que cette partie ne constitue pas un point d'accumulation de gaz. La zone déportée du robinet permettant l'accès à l'accessoire peut aussi être horizontale mais un système de purge des gaz doit alors de préférence être prévu.

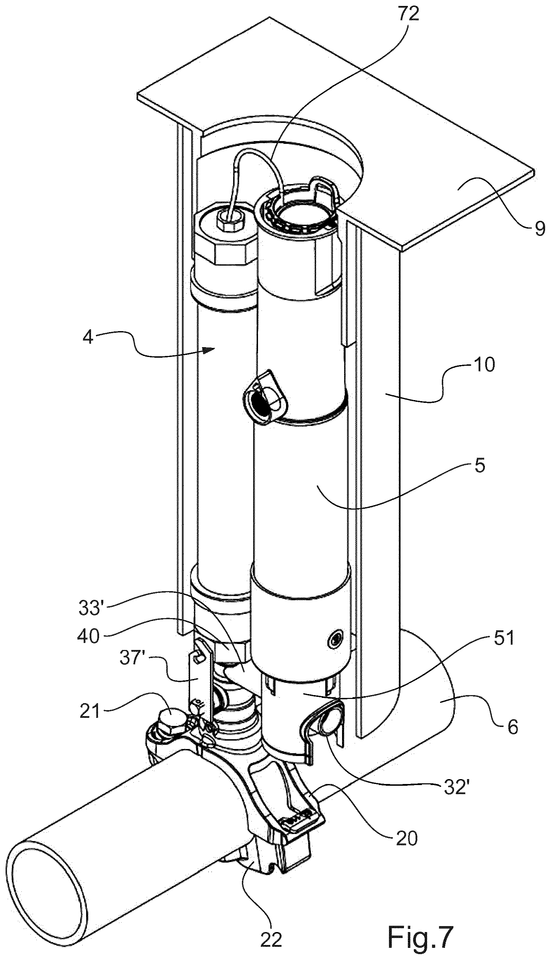

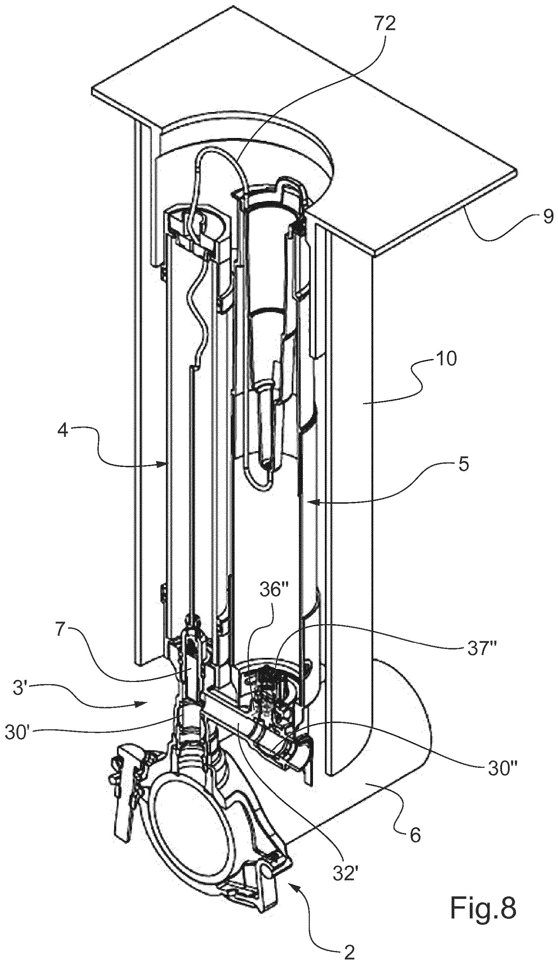

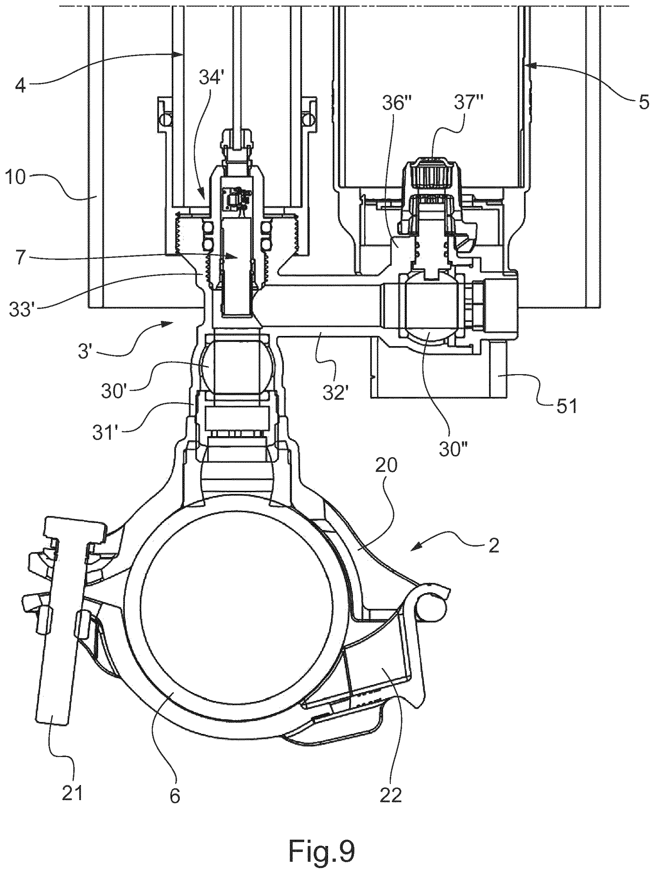

Sur les figures 7 à 9 à robinet à deux clapets manœuvrables, l'accessoire est dans l'axe de la prise sur la canalisation principale et donc dans l'axe du mamelon amont du robinet.

L'ensemble de raccordement 1 présenté figure 1 est particulièrement adapté à une prise sur le dessus d'une canalisation principale 6 et le robinet 3 de l'invention est installé sensiblement verticalement pour être actionnable par le haut/dessus à partir de la surface du sol, la canalisation principale 6 étant enterrée.

Le robinet 3 est un robinet de prise en charge, c'est-à-dire qu'il est installé sur la canalisation principale 6 alors que cette dernière est en charge, sous pression, ce qui permet de créer une nouvelle installation de raccordement de l'eau sans perturber la distribution de l'eau aux autres abonnés déjà reliés à la canalisation principale 6. A titre d'exemples de robinets et de colliers de prise en charge on peut citer ceux mentionnés dans les documents FR2938040, FR2820488, FR2820487, FR2785359. Le robinet 3 de prise en charge est monté sur un collier de prise en charge 2. Le collier de prise en charge 2 comporte une selle 20 s'appliquant sur la conduite principale 6 et le collier 2 est fermé avec une sangle ou une pièce rigide 22, serré par un moyen de serrage 21. L'invention peut cependant s'appliquer à un robinet qui n'est pas un robinet de prise en charge et qui peut être fixé sur la canalisation principale d'une autre manière qu'avec un collier.

Le robinet 3 est monobloc et comporte des moyens de manœuvre avec une partie actionnable comportant un carré de manœuvre 37 accessible par un tube de bouche à clé 5. Ce carré de manœuvre 37 peut être actionné en rotation par une tige d'actionnement ou clé d'actionnement que l'on descend dans le tube de bouche à clé 5. Le robinet 3 comporte un corps avec un mamelon amont 31 côté canalisation principale 6, un mamelon aval 32 côté conduite de dérivation vers l'abonné et un mamelon de manœuvre 36 par/sur lequel le carré de manœuvre 37 est accessible. Les mamelons se raccordent centralement sur une chambre de manœuvre comportant intérieurement une sphère 30 qui peut tourner sur des sièges assurant l'étanchéité. La sphère 30 dans la chambre de manœuvre peut être entrainée en rotation par un axe de manœuvre disposé dans le mamelon de manœuvre, cet axe de manœuvre pouvant lui-même être entrainé en rotation par le carré de manœuvre 37 disposé à l'extrémité du mamelon de manœuvre 36.

Une partie déportée du robinet, en communication hydrique avec la chambre de manœuvre comportant la sphère 30, est aménagée dans une direction opposée au mamelon aval 32 de départ vers le réseau abonné. Cette partie déportée est constituée d'un mamelon, dit mamelon de capteur 33, légèrement inclinée vers le bas par rapport à l'horizontale, par exemple de 10°, de sorte que la lumière ou canal interne de ce mamelon de capteur 33 ne constitue pas un point d'accumulation de gaz afin que le capteur 7 disposé vers l'extrémité en cul de sac 35 de ce mamelon de capteur 33 soit toujours immergé et totalement en contact avec l'eau.

Vers l'extrémité en cul-de-sac 35 de ce mamelon de capteur est aménagée une forme coudée constituant la zone de fixation du capteur 7 qui comporte un orifice de fixation 34 du capteur 7 dont la direction de sortie est verticale. Plus généralement, l'extrémité en cul-de-sac 35 du mamelon de capteur 33 comporte latéralement un orifice de fixation 34 du capteur permettant une installation et un retrait du capteur 7 selon une direction qui est parallèle à celle du tube de bouche à clé 5, ce dernier 5 étant coaxial à l'axe selon lequel les moyens de manœuvre du robinet peuvent être actionnés. Le capteur 7 comporte une extrémité de captage 70 disposée dans le robinet au contact de l'eau et, à l'opposé, une extrémité de raccordement 71 placée à l'extérieur du robinet 3 dans une zone propre.

Cette zone de fixation du capteur est constituée d'une étanchéité et d'un filetage particulièrement adapté pour faciliter le vissage et limiter le nombre de tours nécessaires aux opérations de montage et de démontage du capteur 7. Cette zone de fixation et en particulier son orifice de fixation 34 du capteur 7 peut être obturée par un bouchon d'obturation. Ce bouchon d'obturation est particulièrement utile dans le cas où le capteur n'est pas installé sur le mamelon de capteur 33.

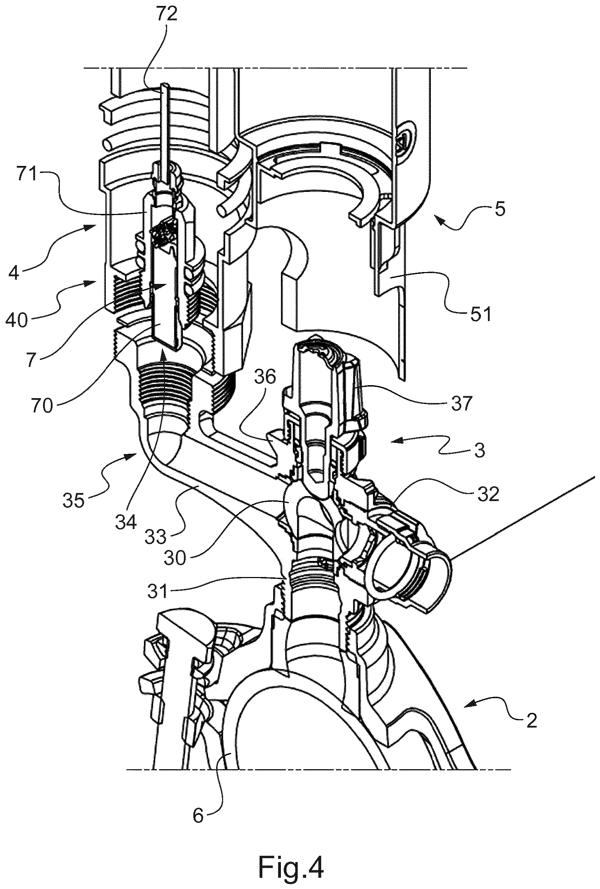

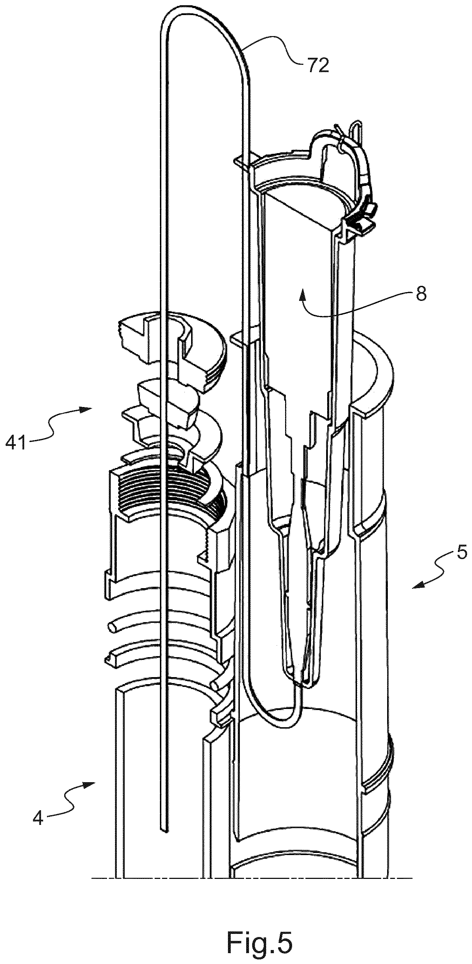

Cette zone de fixation du capteur est surmontée d'un tube de zone propre 4 fixé par des moyens de fixation 40 sur l'extrémité du mamelon de capteur 33, le tube de zone propre 4 étant fermé à son extrémité supérieure par un tampon 41 amovible, l'intérieur du tube de zone propre 4 étant isolé de l'environnement extérieur et restant ainsi « propre ». Les vues en coupe et éclaté des figures 4 et 5 permettent de bien voir les moyens d'étanchéité mis en œuvre pour le tube de zone propre 4 et notamment les joints dont toriques et les assemblages filetés ou collés ou soudés.

Le tube de zone propre 4 et le tube de bouche à clé 5 sont parallèles entre eux et verticaux pour être accessible depuis le sol. Dans cette configuration de tube de zone propre 4, le capteur 7 est donc accessible par un sas d'accès indépendant du tube de la bouche à clé 5, ce dernier servant pour manœuvrer le robinet. Ce sas constitué du tube de zone propre 4 remonte vers la surface du sol et des systèmes de maintien et d'obturation 40, 41 aux deux extrémités du tube de zone propre 4 permettent d'assurer l'étanchéité à l'environnement extérieur. Ce sas d'accès constituant une zone propre n'est pas soumis à la pression du réseau mais doit rester propre et étanche à l'environnement extérieur afin de garantir les conditions d'hygiène lors des opérations de montage et de démontage du capteur 7. On peut prévoir dans une variante d'installer un robinet de purge en partie basse du tube de zone propre 4 afin de pouvoir le vider au cas où de l'eau de la canalisation aurait pu passer à l'intérieur lors de l'opération de remplacement du capteur 7. Ce robinet de purge peut aussi permettre un lavage interne du tube de zone propre et plus généralement de la zone propre par un produit désinfectant. En l'absence d'un tel robinet de purge du tube de zone propre qui peut éventuellement être une source de contamination du fait d'une possible dégradation de ses qualités de fermeture, on utilisera des moyens d'aspiration externes pour vider le tube de zone propre 4.

Le robinet 3 de l'invention comporte dans cet exemple un capteur 7 qui est un hydrophone permettant de mesurer les bruits d'écoulement et de fuite provenant du réseau de distribution d'eau.

Côté de son extrémité de raccordement 71, le capteur 7 est relié par un câble 72 de liaison à un module électronique de surveillance 8 disposé en dehors de la zone propre. Ce câble 72 de liaison remonte vers le haut et traverse d'une manière étanche le tampon 41 amovible fermant l'extrémité supérieure du tube de zone propre 4. Cette traversée du tampon 41 avec sortie du câble 72 de liaison en partie haute s'effectue grâce à un dispositif de fermeture « passe-câble » spécifique.

De préférence, le capteur 7 et le câble 72 de liaison forment un élément indissociable assurant ainsi une étanchéité et isolation entre eux vis-à-vis des éventuels liquides pouvant se trouver dans le tube de zone propre 4. Ainsi, l'ensemble capteur-câble de liaison est complètement étanche. De préférence, côté module électronique de surveillance 8, un connecteur de raccordement étanche est mis en œuvre à l'extrémité du câble 72 de liaison.

Si, de préférence, le câble 72 de liaison est un câble électrique pour transmission des mesures et possiblement de l'alimentation électrique si le capteur est actif, il peut également comporter en outre ou en alternative des moyens de liaison optiques du type fibre optique au cas où le capteur serait à fibre optique.

Le module électronique de surveillance 8 analyse et stocke les données collectées résultant des mesures par le capteur 7 et il comporte de préférence un moyen de télécommunication. Le module électronique de surveillance 8 est ici disposé dans la partie supérieure du tube de bouche à clé 5 qu'il obture.

Le tube de bouche à clé 5 peut être relié au robinet 3 à l'aide d'un tabernacle 51. Dans une variante, on profite de la présence du tube de bouche à clé pour y disposer le module électronique de surveillance, ce dernier pouvant aussi être configuré pour servir d'obturateur de l'extrémité haute du tube de bouche à clé.

L'ensemble 1 est protégé essentiellement en partie haute du tube de zone propre 4 et du tube de bouche à clé par un tube d'enceinte 10 PVC de plus grand diamètre, par exemple ø250 mm, lui-même recouvert par un tampon 9 de voirie standard pour tube ø250 mm. En choisissant la hauteur du tube de zone propre 4 et du tube de bouche à clé 5, l'ensemble 1 s'adapte aux différentes profondeurs d'enfouissement de la canalisation principale 6. Dans une variante, on prévoit des tubes 4, 5 accordéons dont on peut régler la hauteur en les étirant plus ou moins, ce qui déplie certains des plis accordéons du tube et permet son extension en hauteur. Les tubes 4, 5 sont de préférence en matière plastique. Ainsi, aussi bien le moyen de manœuvre 37 du robinet 3 que le capteur 7 sont accessibles au fond d'un puit réalisé dans le sol et cette accessibilité est protégée par la mise en œuvre de tubes spécifiques, un 4 pour la zone propre et un 5 pour le moyen de manœuvre.

Grâce à l'invention, les opérations de montage et de démontage du capteur 7 se font hors pression réseau par fermeture de la sphère 30. Il en résulte une coupure momentanée de l'alimentation en eau de l'abonné. Dans cette configuration, une fermeture du réseau abonné engendre un isolement hydraulique du capteur 7.

De préférence, la sphère 30 est configurée pour, en position d'ouverture de la manœuvre du robinet, mettre en communication hydrique avec la canalisation principale 6 par l'intermédiaire du mamelon amont 31, le mamelon aval 32 et le mamelon de capteur 33. En position de fermeture, de préférence, le mamelon aval 32 est isolé du mamelon de capteur 33 et aucun de ces deux derniers n'est alors en communication avec le mamelon amont 31.

On peut cependant prévoir une sphère 30 configurée pour permettre deux positions de fermeture du robinet, une fermeture capteur dans laquelle seul le mamelon aval 32 reste en communication hydrique avec la canalisation principale 6 et une fermeture totale dans laquelle le mamelon aval 32 et le mamelon de capteur 33 sont isolés de la canalisation principale 6. En position de fermeture totale, de préférence, le mamelon aval 32 est isolé du mamelon de capteur 33.

La sphère 30 du robinet 3 peut donc, selon les cas, comporter un perçage en L ou en T ou plus complexe afin de permettre les communications et barrages attendus entre les mamelons amont 31, aval 32 et de capteur 33 en fonction de la position du carré de manœuvre 37 qui entraîne la sphère 30 disposée dans la chambre de manœuvre par l'intermédiaire d'un axe de manœuvre disposé dans le mamelon de manœuvre 36.

En solution alternative, il est possible de réaliser un robinet ayant des moyens de manœuvre avec deux clapets manœuvrables indépendamment l'un de l'autre, notamment deux sphères.

Dans un premier mode de réalisation de cette solution alternative à deux clapets manœuvrables indépendamment l'un de l'autre, le premier clapet peut correspondre à celui décrit en relation avec les figures 1 à 6 en tant que sphère et le second clapet de capteur est spécifique et intégrée au mamelon de capteur pour spécifiquement couper l'eau côté capteur. Ainsi, on peut utiliser le robinet 3 des figures 1 à 6 mais dans lequel on a ajouté dans le mamelon de capteur un clapet de capteur manoeuvrable. La commande spécifique en rotation du clapet de capteur du mamelon de capteur peut être horizontale (commande par biellette) ou verticale mais elle est disposée de manière à être accessible à partir du sol et à ne pas interférer avec la zone propre. Eventuellement, la commande spécifique en rotation du clapet de capteur peut être configurée pour être accessible par le tube de bouche à clé ou, alors, on prévoit un tube d'enceinte PVC descendant suffisamment bas par lequel ladite commande est accessible.

Dans un deuxième mode de réalisation de cette solution alternative à deux clapets manœuvrables, le premier clapet général permet une fermeture globale du robinet, l'eau ne pouvant plus passer du mamelon amont vers les autres mamelons dont aval et de capteur, ce premier clapet pouvant correspondre à celui décrit en relation avec les figures 1 à 6 en tant que sphère, et le second clapet aval est spécifique et intégrée au mamelon aval pour spécifiquement couper l'eau côté distribution aval. Comme précédemment, le tube de zone propre et le tube de bouche à clé sont présents. De préférence, les clapets sont des sphères manœuvrables.

On va maintenant décrire plus en détail, en relation avec les figures 7 à 9, à quoi peut correspondre un exemple de réalisation selon le deuxième mode de réalisation de la solution alternative à deux clapets manœuvrables indépendamment l'un de l'autre. Avec cette solution alternative, il est possible de couper le branchement abonné sans isoler le capteur de la veine d'eau provenant de la conduite principale.

L'ensemble de raccordement présenté figure 7 est particulièrement adapté à une connexion sur le dessus d'une canalisation principale 6 et le robinet 3' est installé sensiblement verticalement pour être actionnable par le haut/dessus à partir de la surface du sol, la canalisation principale 6 étant enterrée.

Le robinet 3' peut éventuellement être un robinet de prise en charge et il est monté sur un collier de serrage 2. Le collier de serrage 2 comporte une selle 20 s'appliquant sur la conduite principale 6 et le collier 2 est fermé avec une sangle ou une pièce rigide 22, serré par un moyen de serrage 21. L'invention peut cependant s'appliquer à un robinet qui n'est pas un robinet de prise en charge et/ou qui peut être fixé sur la canalisation principale d'une autre manière qu'avec un collier.

Le robinet 3' est monobloc et comporte deux clapets à type de sphères.

Le robinet 3' comporte un mamelon amont 31' côté canalisation principale 6 séparé, par un premier des moyens de manœuvre, d'un mamelon de capteur 33' vers le haut et d'un mamelon aval 32' côté conduite de dérivation vers l'abonné. Le premier clapet général des moyens de manœuvre comporte une sphère 30' de coupure générale et une biellette 37' d'actionnement en rotation de la sphère 30'. L'axe de rotation de la sphère 30' est cette fois horizontal. Cette biellette 37' est commandée depuis le sol en poussée ou traction vers le bas ou vers le haut respectivement pour obtenir la fermeture générale du robinet ou son ouverture.

Le second clapet aval des moyens de manœuvre est sur le mamelon aval 32' et comporte une sphère aval 30" et un carré de manœuvre 37" aval accessible par le tube de bouche à clé 5. Un axe de manœuvre aval est étendu entre le carré de manœuvre 37" et la sphère aval 30" dans un mamelon de manœuvre 36" se raccordant ici sur le mamelon aval 32'. Le second clapet (aval) des moyens de manœuvre est donc actionnable en rotation et l'axe de sa commande en rotation est vertical. Le carré de manœuvre 37" peut être actionné en rotation par une tige d'actionnement ou clé d'actionnement que l'on descend dans le tube de bouche à clé 5.

Le mamelon de capteur 33' est vertical et le capteur 7 est installé d'une manière amovible à son extrémité supérieure comportant un orifice de fixation 34' du capteur 7. Il en résulte que l'axe d'insertion et de retrait du capteur 7 dans l'orifice de fixation 34' du mamelon de capteur 33' est parallèle à l'axe de la commande en rotation du second clapet (aval) des moyens de manœuvre 30", 37" du robinet 3'.

Dans cet exemple, le mamelon de capteur 33' et le mamelon amont 31' sont alignés et sont verticaux.

Comme précédemment, l'extrémité de raccordement du capteur 7 est placée à l'extérieur du robinet 3' dans une zone propre et des moyens identiques peuvent être mis en œuvre (étanchéité, filetage, éventuel bouchon d'obturation, tube de zone propre...). Toujours comme précédemment, le tube de zone propre 4 et le tube de bouche à clé 5 sont parallèles entre eux et verticaux et viennent se raccorder au robinet 3'.

Dans ce type de configuration à deux clapets manœuvrables, les sphères utilisées ont de préférence un percement simple en tout ou rien car chaque sphère est disposée entre seulement deux lumières ou canaux internes de mamelons (on prévoit cependant qu'une des sphères puisse être disposée entre trois lumières ou canaux internes de mamelons) contrairement au mode de réalisation des figures 1 à 6 où la sphère est disposée entre quatre lumières ou canaux internes et où on peut prévoir plusieurs possibilités de communications entre les diverses lumières ou canaux internes des mamelons (par ex. amont vers aval seulement, amont vers capteur seulement, amont vers aval et capteur).

Plus généralement, la solution proposée par l'invention qui est préférentiellement applicable aux réseaux d'eau potable du fait de la présence de la zone propre, peut être utilisée sur tout réseau de transport de fluide liquide ou gazeux.

L'invention peut en pratique être réalisée de nombreuses autres manières. Ainsi, dans une variante de mise en œuvre, le capteur est un robinet de purge permettant de purger les canalisations et/ou de faire des prélèvements d'eau pour analyse de qualité par exemple. On peut également prévoir un montage de robinet avec une prise sur le côté de la canalisation principale et le mamelon de capteur est alors en regard du mamelon amont qui est horizontal et le mamelon aval est vers le bas et en regard du mamelon de manœuvre qui est vers le haut, ces deux derniers étant verticaux. Ainsi, d'une manière générale, l'axe d'insertion et de retrait du capteur dans ledit orifice de fixation est parallèle à l'axe de rotation des moyens de manœuvre destinés à couper la distribution de l'eau.

## Revendications

1. Ensemble de raccordement (1) d'une conduite de dérivation sur une canalisation principale (6) d'eau enterrée sous la surface d'un sol, ledit ensemble (1) comportant un robinet (3) (3') et un tubage (4, 5, 9, 10), le robinet (3) (3') raccordant la conduite de dérivation à la canalisation principale (6) d'eau, le tubage (4, 5, 9, 10) permettant d'accéder au robinet (3) (3') depuis la surface du sol, ledit robinet (3) (3') comportant un corps de robinet avec un mamelon amont (31) (31') destiné à être raccordé à la canalisation principale (6), un mamelon aval (32) (32') destiné à être raccordé à la conduite de dérivation et des moyens de manœuvre (30, 37) (30', 37', 30", 37") du robinet, lesdits moyens de manœuvre permettant au moins la mise en communication hydrique du mamelon aval (32) (32') avec l'eau de la canalisation principale en configuration d'ouverture du robinet (3) (3') ou la suppression de la communication en configuration de fermeture du robinet (3) (3'),
les moyens de manœuvre (30, 37) (30', 37', 30", 37") étant commandables en rotation et comportant au moins un clapet manœuvrable (30) (30', 30") en rotation par l'intermédiaire d'un axe de manœuvre, ledit clapet manœuvrable (30) (30', 30") étant disposé dans une chambre de manœuvre agencée dans le corps du robinet et l'axe de manœuvre étant disposé dans un mamelon de manœuvre (36) (36") du corps du robinet,
le robinet (3) (3') comportant un capteur (7), le capteur (7) étant disposé dans un mamelon de capteur (33) (33') du robinet (3) (3'), le capteur (7) étant fixé au robinet (3) (3') en traversant la paroi dudit robinet (3) (3') de manière étanche et amovible, le capteur (7) comportant une extrémité de captage (70) disposée dans le robinet au contact de l'eau et, opposée, une extrémité de raccordement (71) placée à l'extérieur du robinet (3) (3'),
**caractérisé en ce que**, le mamelon de capteur (33) (33') comporte un orifice de fixation (34) (34') du capteur (7), ledit orifice de fixation (34) (34') étant orienté sur le mamelon de capteur (33) (33') de manière à ce que l'axe d'insertion et de retrait du capteur (7) dans ledit orifice de fixation (34) (34') soit parallèle à l'axe de la commande en rotation des moyens de manœuvre du robinet (30, 37) (30", 37").

2. Ensemble (1) selon la revendication 1, **caractérisé en ce que** les moyens de manœuvre (30, 37) comportent un seul clapet manœuvrable (30), la chambre de manœuvre comportant ledit clapet manœuvrable (30) est agencée dans le corps du robinet (3) entre les mamelons amont (31), aval (32), de capteur (33) et de manœuvre (36), la chambre de manœuvre étant reliée aux mamelons amont (31), aval (32), de capteur (33) et de manœuvre (36), le mamelon amont (31) et le mamelon de manœuvre (36) ayant une même direction d'alignement et le mamelon aval (32) étant à 90° de ladite direction d'alignement,
et **en ce que**, le mamelon de capteur (33) est allongé selon un axe et comporte une extrémité en cul de sac (35) à l'opposé de la chambre de manœuvre, l'axe du mamelon de capteur (33) étant incliné par rapport à la direction d'alignement du mamelon amont (31) et du mamelon de manœuvre (36) d'un angle de 90° plus ou moins 10°, et **en ce que** l'extrémité en cul de sac (35) du mamelon de capteur comporte latéralement un orifice de fixation (34) du capteur (7), ledit orifice de fixation (34) étant orienté sur le mamelon de capteur (33) de manière à ce que l'axe d'insertion et de retrait du capteur (7) dans ledit orifice de fixation (34) soit parallèle à la direction d'alignement du mamelon amont (31) et du mamelon de manœuvre (36).

3. Ensemble (1) selon la revendication 2, **caractérisé en ce que** le mamelon de capteur (33) est disposé sur la chambre de manœuvre sensiblement à l'opposé, c'est-à-dire en regard, du mamelon aval (32),

4. Ensemble (1) selon l'une des revendications 2 et 3, **caractérisé en ce que** le mamelon de capteur (33) est incliné du haut, côté chambre de manœuvre, vers le bas, côté extrémité en cul de sac (35).

5. Ensemble (1) selon l'une des revendications 2 à 4, **caractérisé en ce que** le clapet manœuvrable est une sphère (30) et **en ce que** la sphère (30) est configurée afin que le mamelon de capteur (33) soit mis en communication hydrique avec le mamelon amont (31) au moins lorsque les moyens de manœuvre (30, 37) sont en configuration d'ouverture du robinet (3).

6. Ensemble (1) selon la revendication 1, **caractérisé en ce que** les moyens de manœuvre (30', 37', 30", 37") comportent deux clapets (30', 30") manœuvrables indépendamment l'un de l'autre, un premier clapet général (30') permettant d'ouvrir ou de fermer le mamelon amont (31') et un second clapet aval (30") permettant d'ouvrir ou de fermer le mamelon aval (32'), chacun des clapets pouvant être commandé en rotation par un axe de manœuvre correspondant, le mamelon de capteur (33') est disposé entre le premier clapet amont (30') et le second clapet aval (30"),
et **en ce que**, l'orifice de fixation (34') du capteur (7) est orienté sur le mamelon de capteur (33') de manière à ce que l'axe d'insertion et de retrait du capteur (7) dans ledit orifice de fixation (34') soit parallèle à l'axe de la commande en rotation du second clapet aval (30").

7. Ensemble (1) selon la revendication 6, **caractérisé en ce que** le mamelon amont (31') et le mamelon de capteur (33') sont alignés et disposés de part et d'autre du premier clapet généra! (30') et **en ce que** le mamelon aval (32') est relié latéralement au mamelon de capteur (33'), le premier clapet général (30') étant dans une chambre de manœuvre reliée à deux lumières ou canaux internes de mamelons.

8. Ensemble (1) selon la revendication 6, **caractérisé en ce que** le mamelon amont (31') et le mamelon de capteur (33') sont alignés et disposés de part et d'autre du premier clapet général (30'), le premier clapet général (30') étant dans une chambre de manœuvre reliée à trois lumières ou canaux internes de mamelons, le mamelon aval (32') étant relié à la chambre de manœuvre du premier clapet général (30').

9. Ensemble (1) selon l'une quelconque des revendications précédentes, **caractérisé en ce que** le mamelon de capteur (33) (33') comporte autour de l'orifice de fixation (34) (34') du capteur (7) un raccord permettant le raccordement d'un tube de zone propre (4).

10. Ensemble (1) selon la revendication 9, **caractérisé en ce qu'**il comporte un tube de zone propre (4) à deux extrémités et un capteur (7) destiné à être relié à un module électronique de surveillance (8) par un câble de liaison (72), le tube de zone propre (4) étant raccordé (40) à son extrémité inférieure au raccord autour de l'orifice de fixation (34) (34') du capteur (7), l'extrémité supérieure du tube de zone propre (4) étant fermée par un tampon (41) de fermeture amovible, le câble de liaison (72) s'étendant dans le tube de zone propre (4) pour ressortir à l'extrémité supérieure dudit tube de zone propre (4) à travers un moyen d'étanchéité du tampon (41) de fermeture.

11. Ensemble (1) selon l'une quelconque des revendications précédentes, **caractérisé en ce qu'**il comporte un tube de bouche à clé (5) à deux extrémités et **en ce que** le robinet (3) (3') comporte un système de fixation (51) dudit tube de bouche à clé, l'extrémité inférieure du tube de bouche à clé (5) venant s'insérer sur le robinet (3) (3') autour du mamelon de manœuvre (36) (36").

12. Ensemble (1) selon la revendication 11, **caractérisé en ce qu'**il comporte un module électronique de surveillance (8) et **en ce que** ledit module est disposé dans le tube de bouche à clé (5).

13. Ensemble (1) selon l'une des revendications précédentes, **caractérisé en ce qu'**il comporte un tube d'enceinte (10) destiné au tubage et surmonté au sol d'un tampon (9) en fonte.

## Patentansprüche

1. Anschlußanordnung (1) einer Verzweigungsleitung an einer unter der Oberfläche eines Bodens vergrabenen Wasserhauptkanalisation (6), wobei die Anordnung (1) einen Hahn (3) (3') und eine Verrohrung (4, 5, 9, 10) aufweist, wobei der Hahn (3) (3') die Verzweigungsleitung an die Wasserhauptkanalisation (6) anschließt, wobei die Verrohrung (4, 5, 9, 10) ermöglicht, von der Oberfläche des Bodens an den Hahn (3) (3') zu gelangen, wobei der Hahn (3) (3') einen Hahnkörper mit einem stromaufwärtigen Nippel (31) (31'), der dazu bestimmt ist, an die Hauptkanalisation (6) angeschlossen zu werden, einem stromabwärtigen Nippel (32) (32'), der dazu bestimmt ist, an die Verzweigungsleitung angeschlossen zu werden, und Mittel (30, 37) (30', 37', 30", 37") zum Betätigen des Hahns aufweist, wobei die Betätigungsmittel im geöffneten Zustand des Hahns (3) (3') wenigstens das wassermäßige Inverbindungbringen des stromabwärtigen Nippels (32) (32') mit dem Wasser der Hauptkanalisation oder im geschlossenen Zustand des Hahns (3) (3') das Unterbinden der Verbindung ermöglichen,
wobei die Betätigungsmittel (30, 37) (30', 37', 30", 37") drehend steuerbar sind und wenigstens eine mittels einer Steuerachse drehbar steuerbare Klappe (30) (30', 30") aufweisen, wobei die steuerbare Klappe (30) (30', 30") in einer im Körper des Hahns eingerichteten Steuerkammer angeordnet ist und die Betätigungsachse in einem Betätigungsnippel (36) (36") des Körpers des Hahns angeordnet ist, wobei der Hahn (3) (3') einen Sensor (7) aufweist, wobei der Sensor (7) in einem Sensornippel (33) (33') des Hahns (3) (3') angeordnet ist, wobei der Sensor (7) am Hahn (3) (3') in die Wandung des Hahns (3) (3') dicht und herausnehmbar durchdringender Weise befestigt ist, wobei der Sensor (7) ein im Hahn in Kontakt mit dem Wasser angeordnetes Erfassungsende (70) und, entgegengesetzt, ein außerhalb des Hahns (3) (3') angeordnetes Anschlußende (71) aufweist,
**dadurch gekennzeichnet, daß** der Sensornippel (33) (33') ein Befestigungsloch (34) (34') aufweist, wobei das Befestigungsloch (34) (34') zum Sensornippel (33) (33') hin ausgerichtet ist, so daß die Achse des Einsetzens und Herausnehmens des Sensors (7) in das bzw. aus dem Befestigungsloch (34) (34') parallel zur Achse der Mittel zur Drehbetätigung des Hahns (30, 37) (30", 37") ist.

2. Anordnung (1) gemäß Anspruch 1, **dadurch gekennzeichnet, daß** die Betätigungsmittel (30, 37) eine einzige betätigbare Klappe (30) aufweisen, wobei die die Betätigungsklappe (30) aufweisende Betätigungskammer im Körper des Hahns (3) zwischen dem stromaufwärtigen (31), dem stromabwärtigen (32), dem Sensor- (33) und dem Betätigungsnippel (36) eingerichtet ist, wobei die Betätigungskammer mit den stromaufwärtigen (31), dem stromabwärtigen (32), dem Sensor- (33) und dem Betätigungsnippel (36) verbunden ist, wobei der stromaufwärtige Nippel (31) und der Betätigungsnippel (36) eine gleiche Ausrichtungsrichtung aufweisen und der stromabwärtige Nippel (32) um 90° zur Ausrichtungsrichtung versetzt ist,
und daß der Sensornippel (33) entlang einer Achse langgestreckt ist und, zur Betätigungskammer entgegengesetzt, ein sacklochartiges Ende (35) aufweist, wobei die Achse des Sensornippels (33) gegenüber der Ausrichtungsrichtung des stromaufwärtigen Nippels (31) und des Betätigungsnippels (36) um einen Winkel von 90° plus oder minus 10° geneigt ist, und daß das sacklochartige Ende (35) des Sensornippels seitlich ein Befestigungsloch (34) für den Sensor (7) aufweist, wobei das Befestigungsloch (34) zum Sensornippel (33) hin ausgerichtet ist, so daß die Achse des Einsetzens und Herausnehmens des Sensors (7) in das bzw. aus dem Befestigungsloch (34) parallel zur Ausrichtungsrichtung des stromaufwärtigen Nippels (31) und des Betätigungsnippels (36) ist.

3. Anordnung (1) gemäß Anspruch 2, **dadurch gekennzeichnet, daß** der Sensornippel (33) auf der Betätigungskammer zum stromabwärtigen Nippel (32) im Wesentlichen entgegengesetzt, also gegenüber, angeordnet ist.

4. Anordnung (1) gemäß einem der Ansprüche 2 und 3, **dadurch gekennzeichnet, daß** der Sensornippel (33) von oben, auf der Seite der Betätigungskammer, nach unten, auf der Seite des sacklochartigen Endes (35), geneigt ist.

5. Anordnung (1) gemäß einem der Ansprüche 2 bis 4, **dadurch gekennzeichnet, daß** die betätigbare Klappe eine Kugel (30) ist und daß die Kugel (30) so ausgelegt ist, daß der Sensornippel (33) wenigstens dann in wassermäßiger Verbindung mit dem stromaufwärtigen Nippel (31) ist, wenn die Betätigungsmittel (30, 37) im Öffnungszustand des Hahns (3) sind.

6. Anordnung (1) gemäß Anspruch 1, **dadurch gekennzeichnet, daß** die Betätigungsmittel (30', 37', 30", 37") zwei voneinander unabhängig betätigbare Klappen (30', 30") aufweisen, wobei eine erste, allgemeine Klappe (30') ermöglicht, den stromaufwärtigen Nippel (31') zu öffnen oder zu schließen, und eine zweite, stromabwärtige Klappe (30") ermöglicht, den stromabwärtigen Nippel (32') zu öffnen oder zu schließen, wobei jede der Klappen um eine entsprechende Betätigungsachse drehgesteuert werden kann, und der Sensornippel (33') zwischen der ersten, stromaufwärtigen Klappe (30') und der zweiten, stromabwärtigen Klappe (30") angeordnet ist,
und daß das Befestigungsloch (34') des Sensors (7) zum Sensornippel (33') hin ausgerichtet ist, so daß die Achse des Einsetzens und Herausnehmens des Sensors (7) in das bzw. aus dem Befestigungsloch (34') parallel zur Achse der Drehsteuerung der zweiten, stromabwärtigen Klappe (30") ist.

7. Anordnung (1) gemäß Anspruch 6, **dadurch gekennzeichnet, daß** der stromaufwärtige Nippel (31') und der Sensornippel (33') aufeinander ausgerichtet und beiderseits der ersten, stromaufwärtigen Klappe (30') angeordnet sind und daß der stromabwärtige Nippel (32') seitlich mit dem Sensornippel (33') verbunden ist, wobei die erste, allgemeine Klappe (30') in einer mit zwei inneren Nippeldurchgängen oder -kanälen verbundenen Betätigungskammer ist.

8. Anordnung (1) gemäß Anspruch 6, **dadurch gekennzeichnet, daß** der stromaufwärtige Nippel (31') und der Sensornippel (33') aufeinander ausgerichtet und beiderseits der ersten, allgemeinen Klappe (30') angeordnet sind, wobei die erste, allgemeine Klappe (30') in einer mit drei inneren Nippeldurchgängen oder -kanälen verbundenen Betätigungskammer ist, wobei der stromabwärtige Nippel (32') mit der Betätigungskammer der ersten, allgemeinen Klappe (30') verbunden ist.

9. Anordnung (1) gemäß einem der vorangehenden Ansprüche, **dadurch gekennzeichnet, daß** der Sensornippel (33) (33') um das Befestigungsloch (34) (34') des Sensors (7) herum einen Anschluß aufweist, der das Anschließen eines Rohrs mit einem sauberen Bereich (4) ermöglicht.

10. Anordnung (1) gemäß Anspruch 9, **dadurch gekennzeichnet, daß** sie ein Rohr mit einem sauberen Bereich (4) mit zwei Enden und einen Sensor (7), der dazu ausgelegt ist, über ein Verbindungskabel (72) mit einem elektronischen Überwachungsmodul (8) verbunden zu werden, aufweist, wobei das Rohr mit einem sauberen Bereich (4) an seinem unteren Ende (40) mit dem Anschluß um das Befestigungsloch (34) (34') des Sensors (7) herum verbunden ist, wobei das obere Ende des Rohrs mit einem sauberen Bereich (4) mit einem abnehmbaren Verschlußstopfen (41) verschlossen ist, wobei sich das Verbindungskabel (72) im Rohr mit einem sauberen Bereich (4) erstreckt, um am oberen Ende des Rohrs mit einem sauberen Bereich (4) durch ein Mittel zum Abdichten des Verschlußstopfens (41) hindurch herauszukommen.

11. Anordnung (1) gemäß einem der vorangehenden Ansprüche, **dadurch gekennzeichnet, daß** sie ein Rohr mit Absperrhahnabdeckung (5) mit zwei Enden aufweist und daß der Hahn (3) (3') ein System (51) zum Befestigen des Rohrs mit Absperrhahnabdeckung (5) aufweist, wobei sich das untere Ende des Rohrs mit Absperrhahnabdeckung (5) auf dem Hahn (3) (3') um den Betätigungsnippel (36) (36") herum einfügt.

12. Anordnung (1) gemäß Anspruch 11, **dadurch gekennzeichnet, daß** sie ein elektronisches Überwachungsmodul (8) aufweist und daß das Modul im Rohr mit Absperrhahnabdeckung (5) angeordnet ist.

13. Anordnung (1) gemäß einem der vorangehenden Ansprüche, **dadurch gekennzeichnet, daß** sie ein Gehäuserohr (10) aufweist, das zur Verrohrung bestimmt ist und am oberen Ende am Erdboden einen gußeisernen Übergang (9) aufweist.

## Claims

1. An assembly (1) for connecting a branch line to a main water line (6) buried under the surface of a ground, said assembly (1) including a faucet (3) (3') and a tubing (4, 5, 9, 10), the faucet (3) (3') connecting the branch line to the main water line (6), the tubing (4, 5, 9, 10) allowing access to the faucet (3) (3') from the ground surface, said faucet (3) (3') having a faucet body with an upstream nipple (31) (31') intended to be connected to the main line (6), a downstream nipple (32) (32') intended to be connected to the branch line and means (30, 37) (30', 37', 30", 37") for operating the faucet, said operating means allowing at least putting in fluid communication the downstream nipple (32) (32') with the water of the main line in the open configuration of the faucet (3) (3') or suppressing the communication in the closed configuration of the faucet (3) (3'),
the operating means (30, 37) (30', 37', 30", 37") being rotatably controllable and including at least one valve (30) (30', 30") rotatably operable by means of an operating shaft, said operable valve (30) (30', 30") being arranged in an operating room arranged in the faucet body and the operating shaft being arranged in an operating nipple (36) (36") of the faucet body,
the faucet (3) (3') including a sensor (7), the sensor (7) being arranged in a sensor nipple (33) (33') of the faucet (3) (3'), the sensor (7) being fastened to the faucet (3) (3') by passing through the wall of said faucet (3) (3') in a sealed and removable manner, the sensor (7) including a pick-up end (70) arranged in the faucet in contact with the water and, at the opposite, a connection end (71) placed outside of the faucet (3) (3'),
**characterized in that** the sensor nipple (33) (33') includes an orifice (34) (34) for the fastening of the sensor (7), said fastening orifice (34) (34') being oriented on the sensor nipple (33) (33') in such a manner that the axis of insertion and removal of the sensor (7) into and from said fastening orifice (34) (34') is parallel to the axis of the control in rotation of the operating means of the faucet (30, 37) (30", 37").

2. The assembly (1) according to claim 1, **characterized in that** the operating means (30, 37) include a single operable valve (30), the operating room that includes said operable valve (30) is arranged in the body of the faucet (3) between the upstream (31), downstream (32), sensor (33) and operating (36) nipples, the operating room being connected to the upstream (31), downstream (32), sensor (33) and operating (36) nipples, the upstream nipple (31) and the operating nipples (36) having a same direction of alignment and the downstream nipple (32) being at 90° of said alignment direction,
and **in that** the sensor nipple (33) is elongated along an axis and includes a dead end (35) at the opposite of the operating room, the axis of the sensor nipple (33) being inclined with respect to the direction of alignment of the upstream nipple (31) and the operating nipple (36) by an angle of 90° more or less 10°, and **in that** the dead end (35) of the sensor nipple has laterally a orifice (34) for the fastening of the sensor (7), said fastening orifice (34) being oriented on the sensor nipple (33) in such a manner that the axis of insertion and removal of the sensor (7) into and from said fastening orifice (34) is parallel to the direction of alignment of the upstream nipple (31) and the operating nipple (36).

3. The assembly (1) according to claim 2, **characterized in that** the sensor nipple (33) is arranged on the operating room substantially at the opposite of, i.e. facing to, the downstream nipple (32).

4. The assembly (1) according to one of claims 2 and 3, **characterized in that** the sensor nipple (33) is inclined from the top, on the operating room side, to the bottom, on the dead end (35) side.

5. The assembly (1) according to one of claims 2 to 4, **characterized in that** the operating valve is a sphere (30) and **in that** the sphere (30) is configured in such a way that the sensor nipple (33) is put in fluid communication with the upstream nipple (31) at least when the operating means (30, 37) are in the faucet (3) opening configuration.

6. The assembly (1) according to claim 1, **characterized in that** the operating means (30', 37', 30", 37") include two valves (30', 30") operable independently from each other, a first general valve (30') for opening or closing the upstream nipple (31') and a second downstream valve (30") for opening or closing the downstream nipple (32'), each of the valves being rotatably controllable by a corresponding operating shaft, the sensor nipple (33') is arranged between the first upstream valve (30') and the second downstream valve (30"),
and **in that** the orifice (34') for the fastening of the sensor (7) is oriented on the sensor nipple (33') in such a manner that the axis of insertion and removal of the sensor (7) into and from said fastening orifice (34) is parallel to the axis of the control in rotation of the second downstream valve (30").

7. The assembly (1) according to claim 6, **characterized in that** the upstream nipple (31') and the sensor nipple (33') are aligned and arranged on either side of the first general valve (30') and **in that** the downstream nipple (32') is connected laterally to the sensor nipple (33'), the first general valve (30') being in an operating room connected to two nipple internal lumens or channels.

8. The assembly (1) according to claim 6, **characterized in that** the upstream nipple (31') and the sensor nipple (33') are aligned and arranged on either side of the first general valve (30'), the first general valve (30') being in an operating room connected to three nipple internal lumens or channels, the downstream nipple (32') being connected to the operating room of the first general valve (30').

9. The assembly (1) according to any one of the preceding claims, **characterized in that** the sensor nipple (33) (33') includes, about the orifice (34) (34') for the fastening of the sensor (7), a connector for the connection of a clean zone tube (4).

10. The assembly (1) according to claim 9, **characterized in that** it includes a two-end clean zone tube (4) and a sensor (7) intended to be connected to an electronic monitoring module (8) by a connection cable (72), the clean zone tube (4) is connected (40) at its lower end to the connector about the orifice (34) (34') for the fastening the sensor (7), the upper end of the clean zone tube (4) being closed by a removable manhole closure cover (41), the connection cable (72) extending in the clean zone tube (4) to exit at the upper end of said clean zone tube (4) through a sealing means of the manhole closure buffer (41).

11. The assembly (1) according to any one of the preceding claims, **characterized in that** it includes a two-end curb box tube (5) and **in that** the faucet (3) (3') includes a system (51) for the fastening of said curb box tube, the lower end of the curb box tube (5) being inserted onto the faucet (3) (3') about the operating nipple (36) (36").

12. The assembly (1) according to claim 11, **characterized in that** it includes an electronic monitoring module (8) and **in that** said module is arranged in the curb box tube (5).

13. The assembly (1) according to one of the preceding claims, **characterized in that** it includes an enclosure tube (10) intended for the tubing and topped on the ground by a cast-iron manhole cover (9).
